# FASCICULE DE BREVET EUROPEEN

(11) **EP 1 759 902 B1**
(45) Date de publication et mention de la délivrance du brevet: **28.05.2008**
(21) Numéro de dépôt: 06300747.0
(22) Date de dépôt: 03.07.2006
(51) Int. Cl.: B60J 1/06

(54) **Procédé de remplacement d'un vitrage dans un ensemble de vitrages encapsulé**
Verfahren zum Auswechseln einer Scheibe eines aus mehreren Scheiben bestehenden Fensters
Method for changing a window pane which is part of a window comprising at least two window panes

(30) Priorité: 01.09.2005 FR 0508966
(43) Date de publication de la demande: 07.03.2007
(73) Titulaire: PEUGEOT CITROËN AUTOMOBILES S.A., 78140 Vélizy Villacoublay (FR)
(72) Inventeur: David, Jérôme PEUGEOT CITROËN AUTOMOBILES SA, 92360 Meudon La Forêt (FR)

(56) Documents cités:
- US-A- 3 843 982
- US-A- 5 601 050
- US-A- 5 660 916
- US-A- 6 099 063
- US-A1- 2002 184 842

## Description

L'invention concerne un procédé de remplacement d'un vitrage dans un ensemble de vitrages encapsulés comportant au moins deux vitrages assemblés par au moins une jonction réalisée sous la forme d'une encapsulation, et monté dans un support, comme montré par exemple dans le document US 5601050.

Lors de la conception d'un véhicule automobile, un des problèmes les plus importants à résoudre est celui de pouvoir assurer le conducteur du véhicule d'une bonne visibilité et d'assurer en même temps une rigidité suffisante de l'habitacle du véhicule pour ne pas entraver la sécurité du conducteur et des passagers éventuels du véhicule. Habituellement, les véhicules automobiles comportent une baie constituée, dans une structure bimontant, d'un pare-brise et de deux fenestrons adjacents, droit et gauche, le pare-brise et les fenestrons étant tenus sur chacun des deux côtés du véhicule, par deux montants faisant partie intégrante des structures latérales de la caisse.

Ce problème a été résolu par un ensemble de vitrages conçu pour être réalisé en dehors du véhicule auquel il est destiné et pour être posé comme s'il s'agissait d'une pièce monolithique. Dans un tel ensemble de vitrages, les jonctions entre deux vitrages adjacents sont réalisées sous la forme d'encapsulations, et de préférence sous la forme de surmoulages en polymère. L'ensemble de vitrages encapsulé est fixé dans la structure du véhicule par exemple à l'aide d'un cordon de colle sur toute la périphérie de l'ensemble de vitrages.

Quelque soit la composition d'un tel ensemble de vitrages encapsulés, qu'il s'agisse donc par exemple d'un pare-brise et deux fenestrons formant ensemble un pare-brise triptyque avec une partie frontale et deux retours latéraux, qu'il s'agisse d'un pare-brise et d'un toit vitré ou qu'il s'agisse d'un ensemble formant un pare-brise triptyque avec une partie de toit vitré ou encore qu'il s'agisse d'un ensemble de vitrages encapsulé comportant une quelconque combinaison de vitrages pour l'arrière d'un véhicule, de tels ensembles de vitrages encapsulés et bien d'autres posent un problème en cas de bris d'un des vitrages ou de remplacement d'une pièce détériorée adjacente dans l'environnement véhicule mais distincte de l'ensemble de vitrages et donc en cas de besoin de réparation.

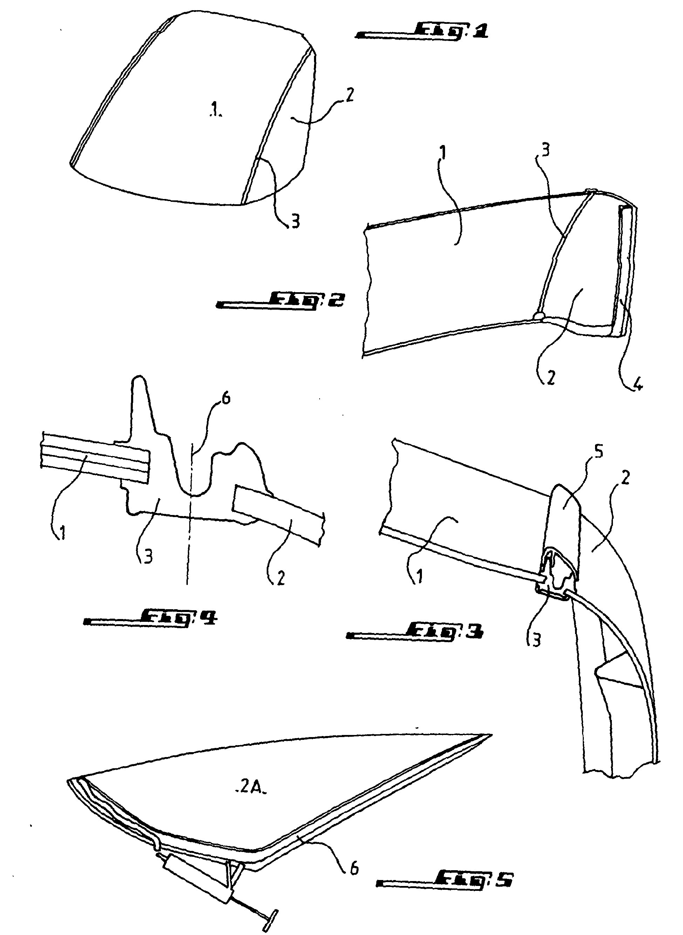

En effet, comme la figure 1 des dessins annexés le montre schématiquement, à titre d'exemple non limitatif, un ensemble de vitrages encapsulé tel un pare-brise triptyque encapsulé comporte une partie frontale 1 constituant le pare-brise proprement dit, et deux parties latérales ou retours latéraux 2 constituant des fenestrons dont la figure 1 ne montre que le fenestron gauche. Le pare-brise triptyque est assemblé à l'aide de deux jonctions 3 réalisées chacune sous la forme d'une encapsulation et de préférence sous la forme d'un surmoulage en polymère obtenu par exemple par injection d'un polymère.

Cependant, lorsqu'un véhicule est équipé d'une baie traditionnelle avec une structure bimontant, chacun des vitrages de cette baie est monté individuellement et peut donc être remplacé sans que cela ne nécessite d'intervenir sur les autres vitrages de la baie. Ainsi, par exemple, les fenestrons qui sont particulièrement susceptibles d'être détruits par des actes de vandalisme, par un gravillonnage ou par d'autres incidents, peuvent être remplacés assez simplement puisqu'ils sont généralement collés sur une feuillure métallique et ne sont solidaires d'aucune autre pièce et notamment d'aucun autre vitrage.

Contrairement à cela, dans le cas d'un ensemble de vitrages encapsulé, la technique d'assemblage rend les vitrages solidaires les uns des autres et il n'est donc plus possible de remplacer un des vitrages sans intervenir sur les autres. Il est donc nécessaire de remplacer complètement l'ensemble des vitrages, d'où un coût élevé à la fois en pièces et en main d'oeuvre.

Le but de l'invention est de remédier aux inconvénients énoncés ci avant.

Plus particulièrement, le but de l'invention est de proposer un procédé de remplacement d'un vitrage dans un ensemble de vitrages solidaires les uns aux autres, et cela de manière à assurer une pose précise du vitrage de remplacement.

Le but de l'invention est atteint avec un procédé de remplacement d'un vitrage dans un ensemble de vitrages encapsulé comportant au moins deux vitrages assemblés par au moins une jonction réalisée sous la forme d'une encapsulation, et monté dans un support, par exemple d'un véhicule.

Selon l'invention, un tel procédé comprend au moins les étapes suivantes :
découper la jonction entre le vitrage à remplacer et le vitrage à conserver,
encoller un vitrage de remplacement,
présenter le vitrage de remplacement dans le support,
déposer un film adhésif sur un côté de la jonction à reconstituer entre le vitrage de remplacement et le vitrage à conserver, de manière à obstruer l'espace entre les deux vitrages,
combler l'espace entre les deux vitrages avec la colle utilisée pour l'encollage du vitrage de remplacement, ou tout produit spécifique jugé approprié, selon le matériau utilisé pour l'encapsulation.

Lorsque l'ensemble de vitrages est monté dans le support à l'aide d'un cordon de colle entourant l'ensemble de vitrages encapsulé, les étapes ci avant sont précédées par une découpe du cordon de colle entre le vitrage à remplacer et le support.

Le procédé de l'invention comporte donc une ou plusieurs étapes constituant la partie démontage du vitrage à remplacer et plusieurs étapes constituant la partie montage du vitrage de remplacement.

Le démontage du vitrage à remplacer consiste essentiellement en des découpes dont le nombre et l'emplacement dépendent de la configuration précise de l'ensemble de vitrages. Dans un pare-brise triptyque dont un des retours latéraux doit être remplacé, on détache d'abord le vitrage à remplacer du support. Ainsi, lorsque par exemple l'ensemble de vitrages est fixé sur ou dans le support à l'aide d'un cordon de colle entourant l'ensemble de vitrages encapsulé, on découpe d'abord le cordon de colle disposé entre le vitrage à remplacer et le support. Ensuite on découpe la jonction entre la partie frontale et le retour latéral du pare-brise triptyque, c'est-à-dire entre le vitrage à remplacer et le vitrage à conserver. La découpe de la jonction entre le vitrage à remplacer et le vitrage à conserver est effectuée selon la forme du profil que la jonction représente. En effet, la forme de la section d'encapsulation est avant tout dimensionnée par rapport aux contraintes auxquelles l'ensemble de vitrages risque d'être exposé. De plus, la forme de la section est généralement choisie de manière à pouvoir remplir aussi une fonction anti-salissure, consistant à canaliser le flux d'eau de pluie vers le toit du véhicule plutôt que de le laisser s'écouler du pare-brise vers les fenestrons.

Une forme spécifique de la jonction, avec moins de matière au milieu, est particulièrement disposée pour une découpe selon cette gorge formée dans la jonction.

En ce qui concerne la profondeur de la découpe, il y a sensiblement deux possibilités, la première consistant à prendre une lame mince et à la conduire le long d'un plan d'appui et la seconde consistant à utiliser un outil dont la forme est complémentaire à celle de la gorge formée dans la jonction. Dans le dernier cas, le guidage de l'outil se fait directement par contact de l'outil sur la jonction. Le déplacement de l'outil peu être facilité en donnant à l'outil une surface glissante, par exemple en téflon, ou en équipant l'outil d'un système de galets.

En ce qui concerne la pose du vitrage de remplacement, les étapes formant cette partie du procédé de l'invention peuvent être effectuées à vue, c'est-à-dire sans utilisation d'un outillage spécifique, ou en utilisant un gabarit ou, plus généralement, un outil de positionnement géométrique, pour assurer un résultat satisfaisant en ce qui concerne le jeu et les affleurements entre les vitrages.

Selon le matériau utilisé pour la jonction et la forme de celle-ci, le procédé de l'invention peut également comporter des étapes tels que, par exemple :
- le vitrage de remplacement est encollé avec une colle polymère,
- on laisse réticuler la colle pendant une durée prédéterminée avant de présenter le vitrage de remplacement dans le support,
- le film adhésif est retiré lorsque la colle est réticulée,
- avant d'encoller les faces à mettre en regard du vitrage à conserver et du vitrage de remplacement, les faces sont enduites avec un produit destiné à faciliter l'adhésion de la colle,
- la jonction est découpé à l'aide d'une lame fine,
- on utilise un vitrage de remplacement encapsulé dans un moule spécifique permettant de réaliser une partie seulement de la jonction à reconstituer entre le vitrage de remplacement et le vitrage à conserver et de laisser la place nécessaire pour la reconstitution de la jonction avec la colle, tout en évitant de mobiliser le moule principale destiné à la production série, voire de détériorer par un usage pour lequel il n'est pas prévu au départ, à savoir mouler une partie seulement de la pièce,
- démontage préalable à la découpe de la jonction, d'un enjoliveur extérieur et/ou d'une garniture intérieure couvrant la jonction et remontage de l'enjoliveur et/ou de la garniture après la reconstitution de la jonction avec la colle,
- le positionnement de la découpe de la jonction est assuré par l'utilisation d'un outil spécifique dont la forme est adaptée aux formes des encapsulations des vitrages,
- le vitrage de remplacement est positionné dans le support à l'aide d'un gabarit conformé pour être fixé sur l'encapsulation du vitrage à conserver,
- la jonction, ou chacune des jonctions, est réalisée comme un surmoulage en polymère,
- la jonction, ou chacune des jonctions, est reconstituée par injection d'un polymère.

Pour le positionnement du vitrage de remplacement, on peut utiliser avantageusement un gabarit dont le corps est un cadre rigide évidé en son milieu pour permettre le passage d'un pistolet à mastic. Dans ce cas, le positionnement et la fixation du vitrage de remplacement se font de la manière suivante :
- encollage du vitrage de remplacement du côté de sa piste d'encollage orientée vers le support,
- positionnement du vitrage de remplacement dans le gabarit par appui sur plusieurs points en bord de vitrage ; ces appuis peuvent être, par exemple, de type « U » afin de garantir le bon positionnement dans les trois dimensions,
- positionnement du gabarit sur le support, par exemple sur le véhicule, en se servant de la partie de jonction restante du côté du vitrage conservé en place pour fixer le gabarit à l'aide des clips ou agrafes présentes pour la fixation de l'enjoliveur extérieur, ce dernier ayant été retiré pour l'intervention,
- collage du vitrage de remplacement au support avec
- positionnement de l'ensemble vitrage-gabarit par rapport au bord supérieur du vitrage qui est la référence géométrique lors du montage de la pièce d'origine en usine et présente donc le meilleur positionnement par rapport au reste du véhicule, par exemple à l'aide d'un ergot
- positionnement par rapport à la surface de l'ensemble de vitrages.

Il est également concevable d'utiliser un système amovible à mettre en place en fin d'opération de positionnement pour garantir un affleurement correct du vitrage de remplacement avec le support, par exemple la caisse du véhicule. Le système amovible peut consister par exemple en des ergots amovibles au bout des bras tenant le vitrage de remplacement.

Le gabarit est retiré une fois la colle polymérisée.

D'autres caractéristiques et avantages de la présente invention ressortiront de la description ci-après d'un mode de mise en oeuvre du procédé de l'invention. Cet exemple de mode de mise en oeuvre est décrit en référence aux dessins dans lesquels :
- la figure 1 montre un pare-brise triptyque comme exemple d'un ensemble de vitrages, par le côté extérieur de l'ensemble de vitrages,
- la figure 2 montre une partie de l'ensemble de vitrages de la figure 1 par le côté intérieur,
- la figure 3 montre la jonction entre deux vitrages de l'ensemble de vitrages,
- la figure 4 montre la jonction de la figure 3 en une vue transversale,
- la figure 5 montre l'application d'un cordon de colle sur un vitrage de remplacement,
- la figure 6 montre la jonction à reconstituer en cours de réalisation,
- la figure 7 montre l'assemblage d'un vitrage à remplacer avec un vitrage conservé,
- la figure 8 montre la découpe de la jonction de la figure 4 à l'aide d'un outil spécifique, et
- les figures 9 et 10 montrent l'assemblage d'un vitrage de remplacement avec un vitrage conservé à l'aide d'un gabarit.

Le procédé de remplacement de l'invention et sa mise en oeuvre sont expliqués ci-après à l'aide d'un pare-brise triptyque choisi arbitrairement comme exemple d'un ensemble de vitrages encapsulé comportant au moins deux vitrages assemblés par au moins une jonction réalisée sous la forme d'une encapsulation. L'exemple représenté dans les dessins comporte une partie frontale 1 formant le pare-brise proprement dit d'un véhicule automobile et deux retours latéraux 2 constituant des fenestrons respectivement droite et gauche. Dans cet ensemble de vitrages encapsulé, il est supposé que la partie frontale 1 est à conserver et que l'un des deux retours latéraux 2, donc un fenestron est à remplacer. La partie frontale 1 et les deux retours latéraux 2 sont solidarisés les uns aux autres par deux jonctions 3 et l'ensemble de vitrages est entouré d'une piste d'encollage permettant d'éviter de détériorer un cordon de colle formé lors de la pose de l'ensemble de vitrages sur un véhicule.

La jonction 3 est réalisée en un polymère, par exemple en polyuréthane. Elle a avantageusement une forme asymétrique que l'on voit plus particulièrement sur la figure 4 et qui, d'une part, enferme les bords respectivement en regard du vitrage à conserver 1 et du vitrage à remplacer 2 et qui, d'autre part, permet de fixer un enjoliveur 5 sur la jonction 3. Généralement, l'enjoliveur 5 est clipsé sur la jonction 3.

Lorsque l'on doit remplacer le vitrage 2, on détache d'abord le vitrage à remplacer 2 du support, par exemple en découpant la colle entre le vitrage à remplacer 2 et le support. Ensuite, on découpe la jonction 3 entre le vitrage à remplacer 2 et le vitrage à conserver 1 suivant une ligne de découpage 6 disposée avantageusement dans la partie comportant le moins de matériaux de la jonction 3. Puis, on encolle un vitrage de remplacement 2A avec la même colle que celle initialement utilisée pour former la jonction 3, ou tout autre produit spécifique jugé appropriés par rapport au matériau utilisé pour réaliser l'encapsulation. Ensuite, on présente le vitrage de remplacement 2A dans le support dans une position prédéterminée par rapport au vitrage à conserver 1.

En raison de la distance entre la partie restante de la jonction 3A du côté du vitrage à conserver 1 et une nouvelle partie de jonction 3B préformée sur le vitrage de remplacement 2A, on dépose un film adhésif 7 sur un côté de la jonction 3 à reconstituer. Le film adhésif 7 obstrue ainsi l'espace entre les deux vitrages 1, 2A par un côté, de préférence par le côté intérieur du vitrage, une colle 8 étant ensuite appliquée dans l'espace entre les deux vitrages 1, 2A.

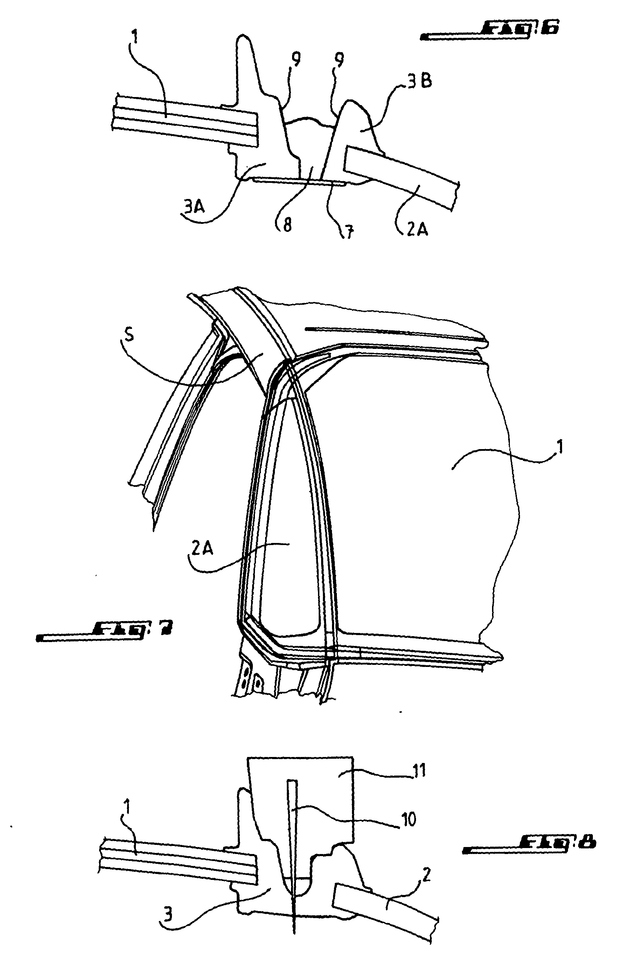

La figure 7 représente, par extrait, une partie de la carrosserie d'un véhicule automobile formant le support S de l'ensemble de vitrage, ainsi que le vitrage à conserver 1 et le vitrage de remplacement 2A. Afin de faciliter l'adhésion de la colle polymère 8 sur les parties de jonction 3A, 3B, leurs surfaces 9 sont préalablement enduites avec un produit, généralement appelé un primaire, destiné à faciliter l'adhésion de la colle.

La figure 8 revient sur la découpe de la jonction 3 entre le vitrage à remplacer 2 et le vitrage à conserver 1 et montre comment une lame 10 est placée pour sectionner la jonction 3 entre les bords en regard de ces deux vitrages. Avantageusement, mais non nécessairement, la lame fine 10 est moulée dans un corps de guidage 11 dont la forme est adaptée aux formes des encapsulations 3A, 3B des vitrages 1, 2. Le corps de guidage 11 forme ainsi, ensemble avec la lame fine 10, un outil spécifique destiné à être posé sur la jonction à découper et conformé pour apporter deux avantages à la découpe, à savoir une profondeur prédéterminée et régulière de la découpe et un guidage le long d'une ligne de découpe prédéterminée, la ligne ou l'axe de découpe 6.

Pour assurer une application homogène de la colle 8 entre les encapsulations 3A, 3B respectivement du vitrage à conserver 1 et du vitrage de remplacement 2A, on peut utiliser un gabarit 12 comportant des clips ou agrafes 13. Le gabarit 12 peut être clipsé sur l'encapsulation 3A de la même manière que le sera l'enjoliveur 5 lorsque le vitrage de remplacement 2A est définitivement posé.

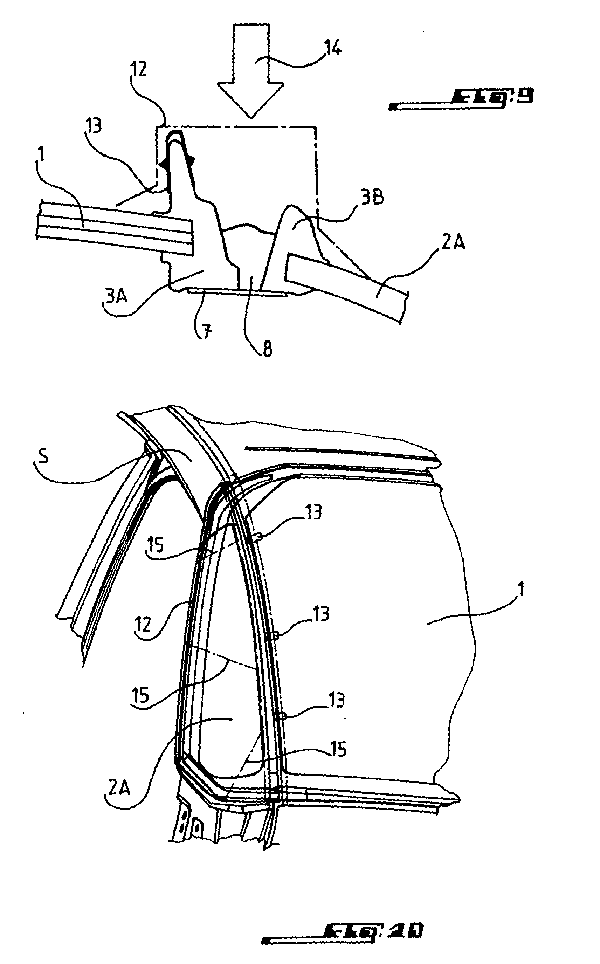

La figure 9 montre par une flèche 14 l'accès d'un pistolet à mastic, le mastic étant en fait la colle polymère.

La figure 10 montre le positionnement du gabarit 12 à l'aide des clips 13 sur l'encapsulation 3A du vitrage à conserver 1. Les lignes 15 indiquent des points d'appui sur le support pour l'ensemble vitrage-gabarit.

## Revendications

1. Procédé de remplacement d'un vitrage dans un ensemble de vitrages encapsulés comportant au moins deux vitrages (1, 2) assemblés par au moins une jonction (3) réalisée sous la forme d'une encapsulation, et monté dans un support,
**caractérisé en ce qu'**il comprend au moins les étapes suivantes :
découper la jonction (3) entre le vitrage à remplacer (2) et le vitrage à conserver (1),
encoller un vitrage de remplacement (2A),
présenter le vitrage de remplacement (2A) dans le support,
déposer un film adhésif (7) sur un côté de la jonction (3) à reconstituer entre le vitrage de remplacement (2A) et le vitrage à conserver (1), de manière à obstruer l'espace entre les deux vitrages (1, 2A),
combler l'espace entre les deux vitrages avec la colle utilisée pour l'encollage du vitrage de remplacement (2A), ou tout autre produit spécifique jugé approprié par rapport au matériau utilisé pour réaliser l'encapsulation.

2. Procédé de remplacement selon la revendication 1, **caractérisé en ce que** le vitrage de remplacement (2A) est encollé avec une colle polymère et **en ce que** le procédé comprend l'étape supplémentaire de laisser réticuler la colle pendant une durée prédéterminée avant de présenter le vitrage de remplacement (2A) dans le support.

3. Procédé de remplacement selon la revendication 1 ou 2, **caractérisé en ce que** le film adhésif (7) est retiré lorsque la colle est réticulée.

4. Procédé de remplacement selon l'une quelconque des revendications 1 à 3, **caractérisé en ce que** les faces à mettre en regard du vitrage à conserver (1) et du vitrage de remplacement (2A) sont enduites avec un produit destiné à faciliter l'adhésion de la colle.

5. Procédé de remplacement selon l'une quelconque des revendications 1 à 4, **caractérisé en ce que** la jonction (3) est découpé à l'aide d'une lame fine (10).

6. Procédé de remplacement selon l'une quelconque des revendications 1 à 5, **caractérisé en ce que** l'on utilise un vitrage de remplacement (2A) encapsulé dans un moule spécifique permettant de réaliser une partie (3B) seulement de la jonction (3) à reconstituer entre le vitrage de remplacement (2A) et le vitrage à conserver (1) et de laisser la place nécessaire pour la reconstitution de la jonction (3) avec la colle (8).

7. Procédé de remplacement selon l'une quelconque des revendications 1 à 6, **caractérisé en ce qu'**il comprend les étapes supplémentaires d'un démontage préalable à la découpe de la jonction (3), d'un enjoliveur extérieur (5) et/ou d'une garniture intérieure couvrant la jonction (3) et d'un remontage de l'enjoliveur (5) et/ou de la garniture après la reconstitution de la jonction (3) avec la colle (8).

8. Procédé de remplacement selon l'une quelconque des revendications 1 à 7, **caractérisé en ce que** le positionnement de la découpe de la jonction (3) est assuré par l'utilisation d'un outil spécifique (10, 11) dont la forme est adaptée aux formes des encapsulations (3A, 3B) des vitrages (1, 2).

9. Procédé de remplacement selon l'une quelconque des revendications 1 à 8, **caractérisé en ce que** le vitrage de remplacement (2A) est positionné dans le support à l'aide d'un gabarit (12) conformé pour être fixé sur l'encapsulation du vitrage à conserver (1).

10. Procédé de remplacement selon l'une quelconque des revendications 1 à 9, **caractérisé en ce que** la jonction (3), ou chacune des jonctions, est réalisée comme un surmoulage en polymère.

11. Procédé de remplacement selon l'une quelconque des revendications 1 à 10, **caractérisé en ce que** la jonction (3), ou chacune des jonctions, est reconstituée par injection d'un polymère.

## Claims

1. Method of replacing a pane in an encapsulated pane assembly comprising at least two panes (1, 2) assembled by at least one junction (3) produced in the form of an encapsulation, and mounted in a support, **characterized in that** it comprises at least the following steps:
cutting the junction (3) between the pane (2) to be replaced and the pane (1) to be preserved,
gluing a replacement pane (2A),
presenting the replacement pane (2A) in the support,
laying an adhesive film (7) on one side of the junction (3) to be restored between the replacement pane (2A) and the pane (1) to be preserved, so as to block off the space between the two panes (1, 2A),
filling the space between the two panes with the adhesive used for gluing the replacement pane (2A), or any other specific product deemed suitable with respect to the material used to produce the encapsulation.

2. Replacement method according to Claim 1, **characterized in that** the replacement pane (2A) is glued with a polymeric adhesive and **in that** the method comprises the additional step of allowing the adhesive to crosslink for a predetermined period before presenting the replacement pane (2A) in the support.

3. Replacement method according to Claim 1 or 2, **characterized in that** the adhesive film (7) is removed when the adhesive is crosslinked.

4. Replacement method according to any one of Claims 1 to 3, **characterized in that** the faces of the pane (1) to be preserved and of the replacement pane (2A) that are to be placed opposite one another are coated with a product which is intended to facilitate adhesion of the adhesive.

5. Replacement method according to any one of Claims 1 to 4, **characterized in that** the junction (3) is cut using a fine blade (10).

6. Replacement method according to any one of Claims 1 to 5, **characterized in that** use is made of a replacement pane (2A) which is encapsulated in a specific mould which makes it possible to produce only a part (3B) of the junction (3) to be restored between the replacement pane (2A) and the pane (1) to be preserved and to leave the space necessary for the restoration of the junction (3) with the adhesive (8).

7. Replacement method according to any one of Claims 1 to 6, **characterized in that** it comprises the additional steps of removing, prior to cutting the junction (3), an exterior decorative strip (5) and/or an interior trim piece covering the junction (3), and of refitting the decorative strip (5) and/or the trim piece after restoring the junction (3) with the adhesive (8).

8. Replacement method according to any one of Claims 1 to 7, **characterized in that** the positioning of the cut made in the junction (3) is ensured by the use of a specific tool (10, 11) whose shape is adapted to the shapes of the encapsulations (3A, 3B) of the panes (1, 2).

9. Replacement method according to any one of Claims 1 to 8, **characterized in that** the replacement pane (2A) is positioned in the support using a template (12) configured to be fastened to the encapsulation of the pane (1) to be preserved.

10. Replacement method according to any one of Claims 1 to 9, **characterized in that** the junction (3), or each of the junctions, is produced as a polymer overmoulding.

11. Replacement method according to any one of Claims 1 to 10, **characterized in that** the junction (3), or each of the junctions, is restored by injecting a polymer.

## Patentansprüche

1. Verfahren zum Austauschen einer Glasscheibe in einer Gesamtheit von eingekapselten Glasscheiben, die wenigstens zwei Glasscheiben (1, 2) enthält, die durch wenigstens eine Verbindung (3) zusammengefügt sind, die in Form einer Einkapselung verwirklicht ist, wobei die Gesamtheit in einem Träger montiert ist,
**dadurch gekennzeichnet, dass** es wenigstens die folgenden Schritte enthält:
Durchtrennen der Verbindung (3) zwischen der auszutauschenden Glasscheibe (2) und der beizubehaltenden Glasscheibe (1),
Aufbringen von Klebstoff auf eine Ersatzglasscheibe (2A),
Anordnen der Ersatzglasscheibe (2A) in dem Träger,
Aufbringen einer Haftschicht (7) auf einer Seite der Verbindung (3), die zwischen der Ersatzglasscheibe (2A) und der beizubehaltenden Glasscheibe (1) wiederherzustellen ist, derart, dass der Zwischenraum zwischen den zwei Glasscheiben (1, 2A) geschlossen wird, und
Füllen des Zwischenraums zwischen den zwei Glasscheiben mit dem Klebstoff, der zum Aufbringen von Klebstoff auf die Ersatzglasscheibe (2A) verwendet wird, oder mit irgendeinem anderen bestimmten Produkt, das in Bezug auf das für die Verwirklichung der Einkapselung verwendete Material als geeignet angesehen wird.

2. Austauschverfahren nach Anspruch 1, **dadurch gekennzeichnet, dass** auf die Ersatzglasscheibe (2A) ein Polymerklebstoff aufgebracht wird und dass das Verfahren den zusätzlichen Schritt enthält, in dem der Klebstoff während einer vorgegebenen Dauer vernetzen kann, bevor die Ersatzglasscheibe (2A) in dem Träger angeordnet wird.

3. Austauschverfahren nach Anspruch 1 oder 2, **dadurch gekennzeichnet, dass** die Haftschicht (7) abgezogen wird, wenn der Klebstoff vernetzt ist.

4. Austauschverfahren nach einem der Ansprüche 1 bis 3, **dadurch gekennzeichnet, dass** die einander zuzuwendenden Seiten der beizubehaltenden Glasscheibe (1) bzw. der Ersatzglasscheibe (2A) mit einem Produkt beschichtet sind, das dazu bestimmt ist, die Haftung des Klebstoffs zu erleichtern.

5. Austauschverfahren nach einem der Ansprüche 1 bis 4, **dadurch gekennzeichnet, dass** die Verbindung (3) mit Hilfe einer dünnen Klinge (10) durchtrennt wird.

6. Austauschverfahren nach einem der Ansprüche 1 bis 5, **dadurch gekennzeichnet, dass** eine Ersatzglasscheibe (2A) verwendet wird, die in einer bestimmten Gießform eingekapselt ist, was die Verwirklichung nur eines Teils (3B) der zwischen der Ersatzglasscheibe (2A) und der beizubehaltenden Glasscheibe (1) wiederherzustellenden Verbindung (3) und das Beibehalten des für die Wiederherstellung der Verbindung (3) mit dem Klebstoff (8) notwendigen Platzes ermöglicht.

7. Austauschverfahren nach einem der Ansprüche 1 bis 6, **dadurch gekennzeichnet, dass** es die zusätzlichen Schritte eines dem Trennen der Verbindung (3) vorhergehenden Abnehmens einer äußeren Zierleiste (5) und/oder einer die Verbindung (3) abdeckenden inneren Dichtung und eines Wiederanbringens der Zierleiste (5) und/oder der Dichtung nach der Wiederherstellung der Verbindung (3) mit dem Klebstoff (8) enthält.

8. Austauschverfahren nach einem der Ansprüche 1 bis 7, **dadurch gekennzeichnet, dass** die Positionierung des Durchtrennens der Verbindung (3) durch Verwenden eines bestimmten Werkzeugs (10, 11) gewährleistet wird, dessen Form an die Formen der Einkapselungen (3A, 3B) der Glasscheiben (1, 2) angepasst ist.

9. Austauschverfahren nach einem der Ansprüche 1 bis 8, **dadurch gekennzeichnet, dass** die Ersatzglasscheibe (2A) in dem Träger mit Hilfe einer Schablone (12) positioniert wird, die ausgebildet ist, um an der Einkapselung der beizubehaltenden Glasscheibe (1) befestigt zu werden.

10. Austauschverfahren nach einem der Ansprüche 1 bis 9, **dadurch gekennzeichnet, dass** die Verbindung (3) oder jede der Verbindungen als eine Polymer-Überform verwirklicht ist.

11. Austauschverfahren nach einem der Ansprüche 1 bis 10, **dadurch gekennzeichnet, dass** die Verbindung (3) oder jede der Verbindungen durch Einspritzen eines Polymers wiederhergestellt wird.
